## Europäisches Patentamt

## European Patent Office

## Office européen des brevets

(19)

(11) Veröffentlichungsnummer: **0 085 358**

**B1**

(12) # EUROPÄISCHE PATENTSCHRIFT

(45) Veröffentlichungstag der Patentschrift:
**23.07.86**

(21) Anmeldenummer: **83100443.7**

(22) Anmeldetag: **19.01.83**

(51) Int. Cl.⁴: **A 01 F 12/24,** A 01 F 7/06,
A 01 D 75/28

(54) **Mähdrescher mit Axialdreschmaschine.**

(30) Priorität: **29.01.82 DE 3202842**

(43) Veröffentlichungstag der Anmeldung:
**10.08.83 Patentblatt 83/32**

(45) Bekanntmachung des Hinweises auf die Patenterteilung:
**23.07.86 Patentblatt 86/30**

(84) Benannte Vertragsstaaten:
**BE DE FR**

(56) Entgegenhaltungen:
**GB-A-2 014 025**
**GB-A-2 053 644**
**NL-A-256 953**
**US-A-2 053 148**
**US-A-2 310 610**
**US-A-2 893 558**
**US-A-2 989 183**
**US-A-3 696 815**
**US-A-4 274 426**

(73) Patentinhaber: **Klöckner- Humboldt- Deutz AG
Zweigniederlassung Fahr, D-7702 Gottmadingen
(DE)**

(72) Erfinder: **Griemert, Heinz, Mozartstrasse 4, D-8883
Gundelfingen (DE)**
Erfinder: **Höfflinger, Werner Dr., Auf dem Rade 11,
D-3003 Ronnenberg 3 (DE)**
Erfinder: **Ritter, Erwin, Haus- Nr. 58, D-8881
Untermedlingen (DE)**

(74) Vertreter: **Haft, Berngruber, Czybulka, Hans-
Sachs- Strasse 5, D-8000 München 5 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Mähdrescher mit einer Axialdreschmaschine gemäß dem Oberbegriff des Patentanspruches 1.

Derartige Mähdrescher sind in der Regel fahrbare Mähdrescher, z.B. nach Art der US-Patentschrift 4 177 820. Das von einer Mähvorrichtung des Mähdreschers geschnittene Erntegut wird der in Richtung der Längsachse des Mähdreschers ausgerichteten Axialdreschmaschine zugeführt. In dieser Axialdreschmaschine rotiert eine Dresch- und Trenntrommel in einem Gehäuse, wobei die Dreschtrommel mit Dreschorganen, z.B. Dreschleisten ausgerüstet ist. Das in Schraubenlinien längs der Dreschtrommel geführte Erntegut wird im Bereich eines Dreschkorbes, der einen bestimmten Sektor, den im folgenden Dreschkorbsektor genannten Abschnitt des Mantels überdeckt, ausgedroschen, fällt durch den Dreschkorb in einen Siebkasten bzw. auf einen Stufenboden, wo das ausgedroschene Korngut noch von Verunreinigungen, wie Spreu etc. gereinigt wird.

Bei derartigen Mähdreschern ist die Dreschmaschine mit Dreschtrommel und Dreschkorb oberhalb des Siebkastens bzw. Stufenbodens üblicherweise in dessen Mitte angeordnet, wobei sich der Dreschkorbsektor symmetrisch zur mittleren Lotebene erstreckt. Nun ist es bekannt, daß bei Axialdreschmaschinen mit einer einzigen Dreschtrommel und deren Drehbewegung das durch den Dreschkorb in den Siebkasten bzw. auf den Stufenboden fallende ausgedroschene Korngut dort unregelmäßig abgelagert wird, und zwar so, daß auf der Seite des Siebkastens bzw. Stufenbodens mehr abgelagert wird, die unterhalb der Stelle der Axialdreschmaschine liegt, an der die rotierende Dreschtrommel auf den Beginn des Dreschkorbes stößt. Dies liegt daran, daß ein Großteil des Erntegutes und zwar bereits etwa die Hälfte innerhalb des ersten Drittels der gesamten Dreschstrecke längs des Dreschkorbes ausgedroschen ist. Wegen der daraus folgenden ungleichmäßigen Verteilung des ausgedroschenen Korngutes auf der Nachbereitungseinrichtung, d.h.dem Siebkasten bzw. dem Stufenboden, ergibt sich wiederum eine ungleichmäßige Reinigung des Korngut an den Stellen, an denen die Nachbereitungseinrichtung überladen ist. So wird z.B. das auf der Nachbereitungseinrichtung vorhandene ausgedroschene Korngut mit Hilfe eines Gebläses mit Luft durchblasen, um Spreu, Häcksel usw. zu entfernen. Es ist einleuchtend, daß die überladenen Bereiche auf der Nachbereitungseinrichtung nicht so effektiv durchströmt werden können, sondern daß sich vielmehr die Luft den widerstandsärmeren Weg über die weniger beladenen Bereiche sucht.

Das ungleichförmige Beladen der Nachbereitungseinrichtung mit dem ausgedroschenen Erntegut macht sich besonders stark dann bemerkbar, wenn der fahrbare Mähdrescher selbst eine gewisse Seitenneigung aufweist, d.h. in unebenem Gelände verwendet wird. Ist das Gelände dann noch in Richtung auf den überladenen Bereich der Nachbereitungseinrichtung geneigt, so wird dieser Bereich unter anderem durch Nachrutschen des Korngutes noch weiter überladen. Dieser Effekt kann auch dann nicht ausgeräumt werden, wenn die Nachbereitungseinrichtung, z.B. der erwähnte Stufenboden mit sogenannten Hangleisten ausgerüstet ist, um zumindest das Nachrutschen von Korn auf dem Stufenboden zu verhindern.

Es sind verschiedene Versuche unternommen worden, diese unregelmäßige Ablagerung des Korngutes auf der Nachbereitungseinrichtung zu vermeiden. Eine Lösung bestand darin, die Axialdreschmaschine mit der Dreschtrommel aus der oben erwähnten mittigen Lage oberhalb der Nachbereitungseinrichtung zu versetzen, so daß der Ablagebereich unterhalb etwa des ersten Drittels des Dreschkorbes aus dem etwa die Hälfte des ausgedroschenen Korngutes austritt, künstlich vergrößert wird. Hier kann zwar bei ebenem Gelände ein gewisser Ausgleich über den gesamten Ablagebereich auf der Nachbereitungseinrichtung festgestellt werden; sobald jedoch der Mähdrescher auf nicht ebenem Gelände eingesetzt wird, wird die Ablagerung des Korngutes auf der Nachbereitungseinrichtung wiedeium unregelmäßig. Eine Beeinflussung der Ablagerung über die Breite der Nachbereitungseinrichtung känn hierbei nicht vorgesehen werden.

Eine Verbesserung ist in der bereits oben erwähnten US-Patentschrift 4 177 820 enthalten. Die Axialdreschmaschine ist innerhalb des Siebkastens wiederum außermittig zu der mittleren Lotebene gelagert. Außerdem ist auf der Seite, an der die Dreschtrommel auf den Dreschkorb aufläuft, an der Wand des Siebkastens ein Prallblech vorgesehen, welches einseitig an der Wand des Siebkastens angelenkt ist und dessen Neigung von außen verstellt werden kann. Auf dieses Prallblech trifft ein Teil der aus dem ersten Drittel des Dreschkorbes austretenden Körner auf und wird in Richtung auf den mittleren Bereich des Siebkastens umgelenkt. Durch die erwähnte Verstellmöglichkeit des Prallbleches kann der Anteil der umgelenkten Körner in bestimmten Grenzen variiert werden.

Auch diese Lösung kann jedoch dann nicht befriedigen, wenn mit dem Mähdrescher auf extrem geneigtem Gelände gearbeitet wird.

Aus der US-Patenrschrift 3 696 815 ist ein Mähdrescher mit einer Doppel-Axialdreschmaschine bekannt, der für jede Dreschtrommel einen vertikal verstellbaren Dreschkorb aufweist. An den jeweils äußeren Längskanten des Dreschkorbes sind um diese Längskanten schwenkbare Seitenplatten vorgesehen. Diese Seitenplatten sind entfernbar, um das Innere des Mantelgehäuses zugänglich zu machen und z.B. den Dreschkorb umzurüsten. Diese Seitenplatten können auch als zusätzliche Dreschkorbteile ausgebildet sein, so daß Erntegut noch im Bereich dieser Seitenplatten abgeschieden wird. Falls diese Seitenplatten als Zusatz-Korbteile ausgebildet sind, so wird der Dreschkorbsektor in Umfangsrichtung verlängert, wobei diese Verlängerung allerdings nur einseitig, jeweils an den Außenseiten der beiden Dreschkörbe erfolgt. Je nach Ausbildung des Dreschkorbes können diese Zusatzkorbteile mit Öffnungen oder einem Gitternetzwerk versehen und damit an unterschiedliches Erntegut angepaßt werden. Bei bestimmten Arten von Erntegut ist es vorgesehen, Seitenplatten ohne Öffnungen zu verwenden, so daß der wirksame Dreschkorbsektor auf den Bereich des Dreschkorbes eingeschränkt ist.

Die Ausbildung der Axialdreschmaschine mit dem Dreschkorb ist nicht dazu geeignet, bei Seitenneigungen des Mähdreschers die ungleichmäßige Beschickung der Nachbereitungseinrichtung mit Erntegut zu kompensieren, und zwar auch dann nicht, wenn eine Axialdreschmaschine mit lediglich einer Dreschtrommel und dann dementsprechend zwei auswechselbaren Seitenplatten verwendet wird. Mit den Seitenplatten wird immer ein Haupt-Dreschkorbsektor freigelassen, der mit Hilfe entsprechender, an das jeweilige Erntegut angepaßten Seitenplatten lediglich vergrößert werden kann. Eine kontinuierliche Kompensierung der ungleichförmigen Beschickung der Nachbereitungseinrichtung mit Erntegut bei unterschiedlichen Seitenneigungen des Mähdreschers ist somit nicht möglich.

Der Erfindung liegt die Aufgabe zugrunde, einen Mähdrescher mit einer Axialdreschmaschine so auszugestalten, daß auf der Nachbereitungseinrichtung der Dreschmaschine, z. B. einem Siebkasten oder einem Stufenboden, eine möglichst gleichmäßige Querverteilung innerhalb der Ablagerung des ausgedroschenen Korngutes erreicht wird; dies soll auch für einen großen Seitenneigungsbereich des Mädreschers gelten, so daß mit einem Mähdrescher gemäß der Erfindung auch bei stark geneigtem Gelände die Nachbereitungseinrichtung gleichmäßig mit Korngut belegt wird.

Gemäß der Erfindung ist diese Aufgabe durch die im kennzeichnenden Teil des Patentanspruches 1 angegebenen Merkmale gelöst.

Demgemäß liegt ein wesentliches Merkmal der Erfindung darin, daß die Lage des Dreschkorbsektors in bezug zu der Fläche der Nachbereitungseinrichtung, d. h. dem Siebkasten oder einem Stufenboden, in Richtung des Umfangs des Dreschkorbes beidseitig kontinuierlich verändert werden kann. Dies bedeutet, daß der Zentrumswinkel des den Dreschkorb begrenzenden Sektorbereichs variiert werden kann, und zwar insbesondere hinsichtlich der Ausrichtung in bezug auf die Fläche der Nachbereitungseinrichtung als auch bei bestimmten Anwendungen zusätzlich hinsichtlich der Winkelgröße.

Bei einer derartigen Verstellmöglichkeit des Dreschkorbsektors kann die Axialdreschmaschine mittig oberhalb der Nachbereitungseinrichtung angeordnet werden. Die Seitenwände der Nachbereitungseinrichtung können relativ nah dem Mantelgehäuse der Axialdreschmaschine gelegen sein, so daß ein Teil der auf die Seitenwände auftreffenden Körner des ausgedroschenen Ernteguts reflektiert und in Richtung auf die Fläche der Nachbereitungseinrichtung umgelenkt wird. Eine gleichmäßige Querverteilung kann dann durch die erwähnte Verstellung des Dreschkorbsektors erzielt werden. Dies ist auch bei starken Seitenneigungen der Fall, die mit herkömmlichen Lösungen nicht mehr beherrscht werden können.

Für die erwähnte Einstellung des Dreschkorbsektors kann z. B. das die Dreschtrommel umgebende Mantelgehäuse gemeinsam mit dem Dreschkorb um die Längsachse der Dreschmaschine insgesamt verdreht werden. Ebenso ist es möglich, die beiden Randbereiche des Dreschkorbs durch kontinuierlich verstellbare Abdeckplatten bzw. Abdeckschieber entsprechend der gewünschten Einstellung des Dreschkorbsektors abzudecken bzw. freizugeben. Wenn die Abdeckplatten unabhängig voneinander betätigt werden, so kann auch die Größe des Dreschkorbsektors eingestellt werden.

Die Verstellung des Dreschkorbsektors erfolgt entweder von Hand aufgrund von Erfahrungswerten, die z.B. in Tabellenform dem Betriebspersonal angegeben werden können; außerdem kann während des Betriebs des Mähdreschers die Querverteilung des abgelagerten Korngutes auf der Nachbereitungseinrichtung von Meßgeräten, z.B. Drucksensoren erfaßt werden. Aufgrund dieser Meßwerte kann dann der Dreschkorbsektor eingestellt werden. Hierbei ist es möglich, diese Einstellung auch automatisch vorzunehmen. Die Verstellung erfolgt dann über Stellmotoren, die von den Meßsignalen der Sensoren angesteuert werden.

Da wie oben erwähnt, die Querverteilung auf der Nachbereitungseinrichtung insbesondere bei Seitenneigungen des. Mähdreschers auf schrägem Gelände unregelmäßig wird, kann die Verstellung des Dreschkorbsektors einfach in Abhängigkeit dieser Seitenneigung des Mähdreschers, d.h. durch eine einfache Hangautomatik erfolgen. Diese Hangautomatik besteht dann im wesentlichen aus einem gedämpften Pendel, dessen Stellung zu der als Bezugsfläche dienenden Fläche der Nachbereitungseinrichtung als Stellgröße für Stellmotoren zur Einstellung des Dreschkorbsektors dient.

Weitere Ausgestaltungen und Vorteile der Erfindung gehen aus den Unteransprüchen in Verbindung mit der nachfolgenden Beschreibung hervor, in der zwei Ausführungsbeispiele anhand der Zeichnung näher erläutert sind. In der Zeichnung stellen dar:

Figur 1 eine teilweise geschnittene Seitenansicht eines selbstfahrenden Mähdreschers, der eine Axialdreschmaschine mit einem Dreschkorb mit einstellbarem Dreschkorbsektor gemäß der Erfindung enthält;

Figur 2 einen Schnitt längs der Linie A-B in Figur 1 zur Erläuterung eines ersten Ausführungsbeispiels eines Dreschkorbes mit verstellbarem Dreschkorbsektor;

Figur 2a eine schematische Darstellung einer Dreschkorbverstellung;

Figur 3 einen Schnitt durch den Mähdrescher gemäß Figur 1 zur Erläuterung eines weiteren Ausführungsbeispiels eines Axialdreschmaschine mit einer Verstellmöglichkeit des Dreschkorbsektors gemäß der Erfindung;

Figur 4 ein schematisches Blockschaltdiagramm zur automatischen Verstellung des Dreschkorbsektors.

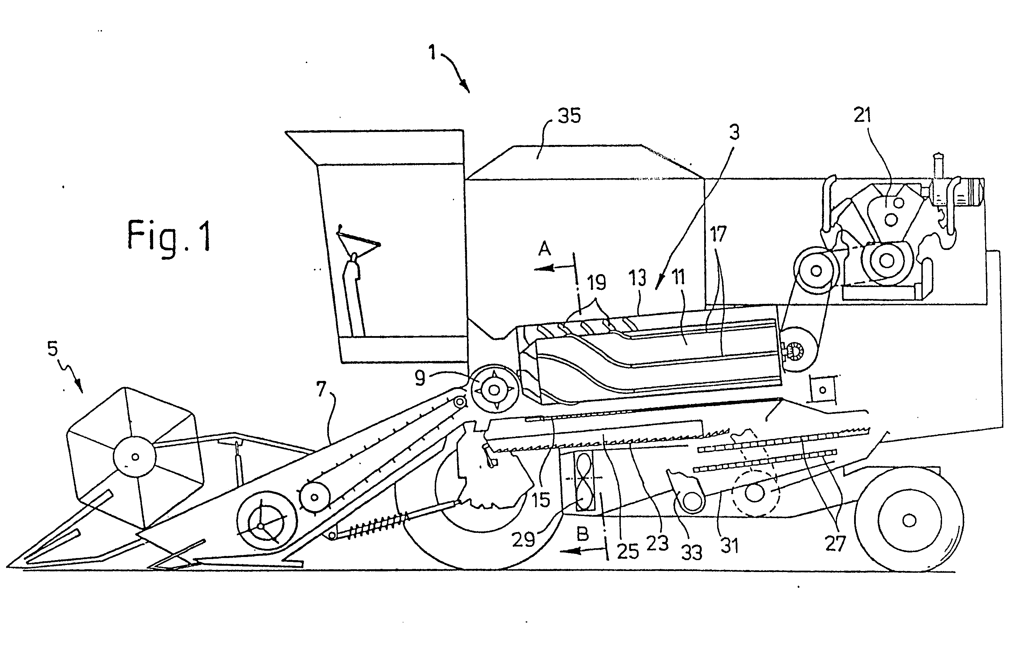

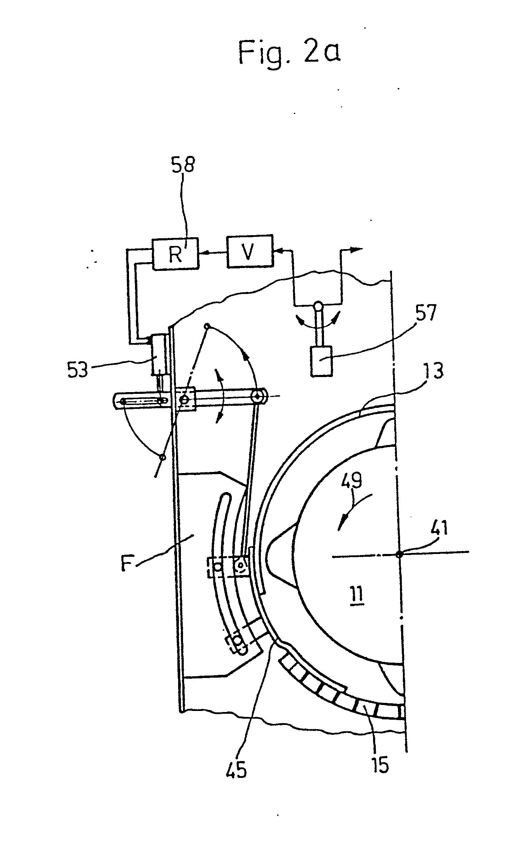

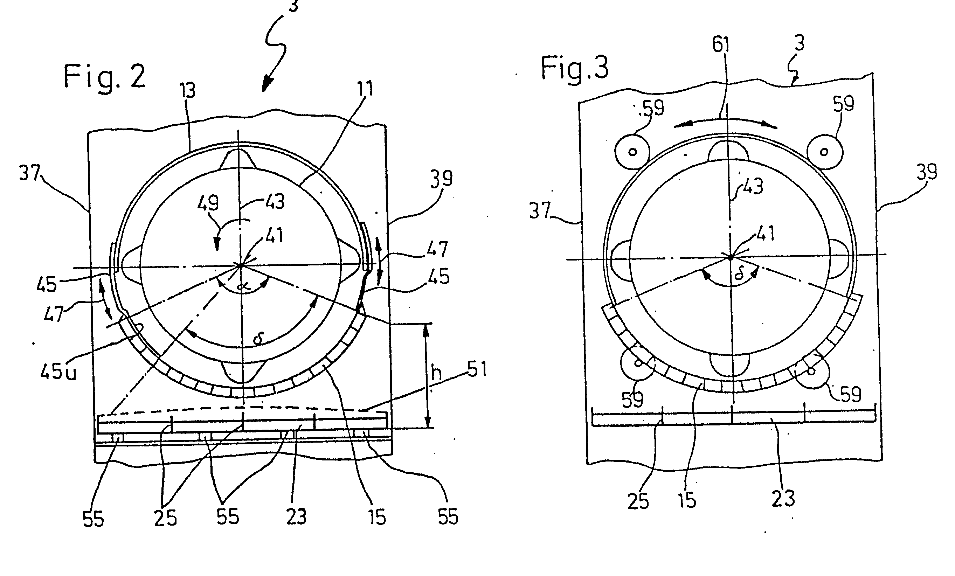

In Figur 1 ist ein selbstfahrender Axialfluß-Mähdrescher 1 mit einer Axialdreschmaschine 3 zum Ernten und Ausdreschen von Erntegut, z.B. Getreide abgebildet. Der Mähdrescher weist an seinem vorderen Ende im Anschluß an ein angedeutetes Schneidwerk 5 einen Förderer 7 auf, mit dem das geschnittene Erntegut in diesem Falle über eine Zuführwalze 9 in die Axialdreschmaschine 3 eingebracht wird. Die Axialdreschmaschine weist eine Dreschtrommel 11 in Form eines Rotors auf, der von einem zylindrischen Mantelgehäuse 13 umschlossen wird, wobei der untere Teil des Mantelgehäuses durch eine Dreschkorbanordnung 15 gebildet ist. Auf der Dreschtrommel bzw. dem Rotor 11 sind im Bereich des Dreschkorbes in Schraubenlinien geführte Dreschleisten 17 vorgesehen, die mit dem oberen Bereich und innerhalb des Mantelgehäuses 13 feststehenden und ebenfalls schraubenförmig angeordneten Leitblechen 19 zusammenwirken: bei angetriebener Dreschtrommel z.B. durch einen Motor 21 wird in diesem Bereich das Erntegut ausgedroschen. Die Körner fallen hier durch die Löcher des Dreschkorbes bzw. der Dreschkorbanordnung 15 nach unten auf einen Stufenboden 23, wobei den Körner ebenfalls durch das Sieb des Dreschkorbes hindurchfallende Spreu oder sonstige kleine Verunreinigungen beigemengt sind. Der ebene Stufenboden 23 weist außerdem noch mehrere in Längsrichtung der Dreschmaschine verlaufende Hangleisten 25 auf, durch die die Fläche des Stufenbodens insgesamt mehrfach, in den Figuren 2 und 3 jeweils vierfach unterteilt wird.

Durch diese Hangleisten wird bei extremen Seitenneigungen des Mähdreschers verhindert, daß Korngut auf dem Siebboden übermäßig seitlich verrutschen kann. Unterhalb des Stufenbodens, längs dem das ausgedroschene Korngut mit den Verunreinigungen durch Rüttelbewegungen nach hinten auf eine Siebanordnung 27 transportiert wird, ist ein Gebläse 29 angeordnet, dessen Luftstrom das auf den Sieben der Siebanordnung abgelagerte Korngut durchströmt und so die darin enthaltene Spreu und andere Verunreinigungen entfernt. Das so gereinigte und nach unten aus der Siebanordnung 27 in eine Sammelkammer 31 fallende Korngut wird mit einem Kornförderer 33 in einen Korntank 35 gefördert.

Die Axialdreschmaschine 3 ist, wie aus den Figuren 2 und 3 hervorgeht, durch eine linke und rechte Seitenwand 37 bzw. 39 seitlich und durch den erwähnten Stufenboden 23 nach unten begrenzt, wobei die Dreschtrommel symmetrisch in diesem Gehäuse gelagert ist, so daß sich die Drehachse 41 der Dreschtrommel in der mittleren senkrechten Ebene 43 auf der Fläche des Stufenbodens erstreckt.

In Figur 2 ist ein Schnitt durch die Axialdreschmaschine in dem Bereich des Dreschkorbes 15 dargestellt. Dieser Dreschkorb überdeckt insgesamt einen Umfangswinkel $\alpha$ von etwa 140°, der durch die senkrechte Ebene 43 symmetrisch geteilt wird. Der obere Teil der Dreschtrommel 11 ist durch das zylindrische Mantelgehäuse 13 abgeschlossen, wobei dieses Mantelgehäuse jedoch nur etwa die Hälfte der Dreschtrommel überdeckt. Der Zwischenraum zwischen den Enden des Mantelgehäuses 13 und dem Dreschkorb 15 wird von verstellbaren Abdeckplatten bzw. Abdeckschiebern 45 überspannt. Diese Abdeckschieber mit kreisbogenförmigem Querschnitt gleiten mit ihrer oberen Hälfte außen auf dem zylindrischen Mantelgehäuse 13, mit ihrer unteren Hälfte im inneren Bogen des Dreschkorbes 15 und können in Umfangsrichtung des Mantelgehäuses des Dreschkorbes längs der Doppelpfeile 47 verschoben werden. Mit diesen Abdeckschiebern 45 kann der tatsächlich wirksame Dreschkorbsektor mit dem Zentrumswinkel $\delta$ eingestellt werden. In Figur 2 ist dieser Dreschkorbsektor mit dem Zentrumswinkel $\delta$ so eingestellt, daß der linke Abdeckschieber 45 mit seinem unteren Bereich 45u vollständig in den Dreschkorb 15 eintaucht, während der rechte Abdeckschieber praktisch nur mit seiner untersten Kante des Bereiches 45u an der rechten äußeren Kante des Dreschkorbes 15 anliegt. Bei einer Antriebsrichtung der Dreschtrommel im Gegenuhrzeigersinn, wie dieses durch den Pfeil 49 angedeutet ist, schneidet die linke Verlängerung des Dreschkorbsektors $\delta$ etwa den linken äußeren Rand des Stufenbodens 23, während die rechte Begrenzung des Dreschkorbsektors die rechte Seitenwand 39 in einer bestimmten Höhe h oberhalb des Stufenbodens 23 schneidet. Auf diese Weise wird erreicht, daß die etwa durch das erste Drittel des Dreschkorbsektors $\delta$ austretende Kornmenge über die linke Hälfte des Stufenbodens 23 verteilt wird, während der restliche Anteil des Korngutes über die rechte Hälfte des Stufenbodens 23 abgelagert wird. Aufgrund des größten Abscheidegrades in der ersten Hälfte des Dreschkorbes in Umfangsrichtung bzw. Drehrichtung gesehen, ergibt sich somit eine annähernd regelmäßige Querverteilung des abgelagerten Korngutes über die Breite des Stufenbodens 23, wie dieses durch die gestrichelte Linie 51 angedeutet ist.

Die Verstellung der beiden Abdeckschieber 45 kann unabhängig voneinander erfolgen, z.B. von Hand oder automatisch. In Figur 2a ist eine Konstruktion einer Dreschkorbverstellung schematisch dargestellt. Die beiden Abdeckschieber 45 sind jeweils vorne und hinten in Führungen F gelagert, was hier nur für einen Abdeckschieber dargestellt ist. Mit dem Abdeckschieber 45 ist ein Führungsarm 50 verbunden, an dessen Ende ein Führungsbolzen 52 in einem kreisförmigen Führungsschlitz 54 der Führung F eingreift. Oberhalb der Führung F ist ein zweiarmiger Stellhebel 56 am Gehäuse angeordnet, der in Richtung des Doppelpfeiles nach beiden Seiten schwenkbar ist. Mitdem einen Ende dieses Verstellhebels 56 ist ein Schwinghebel 60 verbunden, dessen anderes Ende an dem Führungsarm des Abdeckschiebers 45 angelenkt ist. Durch Schwenken des Stellhebels 56 kann der Überdeckungsbereich des Dreschkorbes 15 durch die Abdeckschieber variiert werden. Der Stellhebel 56 ragt dabei aus dem Mähdreschergehäuse nach außen, so daß diese Verstellung auch von Hand erfolgen kann.

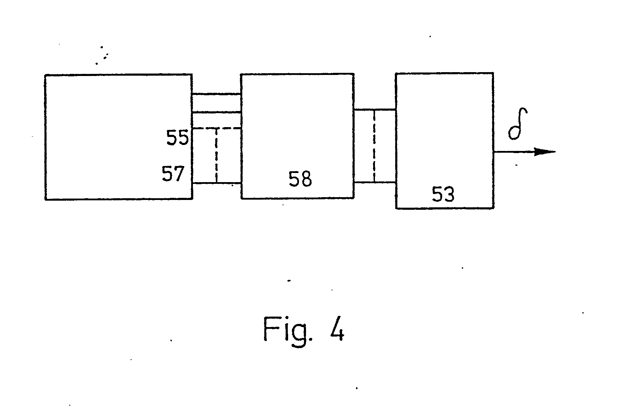

Beim Automatikbetrieb werden die Stellhebel 56 mit Hilfe von Stellmotoren 53 verstellt. Die Verstellung erfolgt z.B. aufgrund der Belastung des Stufenbodens 23, die mit mehreren Drucksensoren 55 unterhalb des Stufenbodens gemessen werden kann. Anstelle der Drucksensoren kann auch ein einfacher Neigungsmesser 57 in Form eines Pendels vorgesehen werden, der die Seitenneigung des Mähdreschers erfaßt. Von einem Meßumformer 62 werden die erfaßten Meßwerte des Neigungsmessers 57 an ein Stellglied 58 weitergegeben, durch das Stellmotoren 53 zur Einstellung des Dreschkorbsektors betätigt werden; vgl. Figuren 2a und 4. Wie in Figur 2a angedeutet, kann ein einziger Neigungsmesser 57, hier ein Pendel, zur Verstellung der Abdeckschieber 45 an beiden Seiten des Dreschkorbes verwendet werden. Eine Einzelsteuerung wäre selbstverständlich auch möglich.

In Figur 3 ist eine andere Ausführungsform einer Axialdreschmaschine mit verstellbarem Dreschkorbsektor δ dargestellt. Für gleiche bzw. gleichwirkende Teile sind die gleichen Bezugsziffern wie zu dem Ausführungsbeispiel gemäß Figur 2 verwendet.

Die Axialdreschmaschine 3 weist wiederum ein durch zwei Seitenwände 37 und 39 sowie den Stufenboden 23 begrenztes Siebkastengehäuse auf, in dem die zylindrische Dreschtrommel 11 mit den Dreschleisten 15 und dem zylindrischen Mantelgehäuse 13 mittig oberhalb des Stufenbodens 23 gelagert ist. Die Drehachse der Dreschtrommel ist wie oben mit 41 bezeichnet. Mit dem zylindrischen Mantelgehäuse 13 ist im unteren Bereich fest ein Dreschkorb 15 verbunden, der über einen Zentrumswinkel δ entsprechend dem wirksamen Dreschkorbsektor reicht. Das Mantelgehäuse 13 und der Dreschkorb 15 sind längs ihres Umfanges auf vier Führungsrollenpaaren bzw. Führungswalzen 59 gelagert, die kraftschlüssig an dem Mantelgehäuse 13 anliegen. Diese Führungsrollen bzw. Führungswalzen können synchron durch einen hier nicht dargestellten Stellmotor verstellt werden, so daß das gesamte Mantelgehäuse mit dem Dreschkorb in Umfangsrichtung in beiden, durch den Doppelpfeil 61 gekennzeichneten Richtungen verdreht werden kann. Der Dreschkorbsektor überdeckt hierbei einen Winkel δ von etwa 120° bis 130°. Je nach der zu erwartenden ungleichmäßigen Querverteilung der Beladung des Stufenbodens 23 mit Korngut kann das gesamte Mantelgehäuse mit dem Dreschkorb verdreht werden, so daß der Dreschkorbsektor wiederum unsymmetrisch hinsichtlich der vertikalen Ebene 43 auf der Fläche des Siebbodens eingestellt werden kann. Diese Einstellung des Dreschkorbsektors erfolgt automatisch aufgrund von Meßsignalen, die von Drucksensoren entsprechend den Sensoren 55 oder einem Neigungsmesser entsprechend dem Neigungsmesser 57 gemäß Figur 2 geliefert werden. Die Einstellung des Dreschkorbsektors δ wird, wie in Figur 4 gezeigt, wiederum durch das erwähnte Stellglied 58 erreicht.

Die oben beschriebenen Ausführungsbeispiele können selbstverständlich abgewandelt werden. Wesentlich ist lediglich, daß die Ausrichtung des Dreschkorbsektors und in bestimmten Fällen auch dessen Größe durch besondere Einstellmittel variiert werden können. Es hat sich gezeigt, daß lediglich durch diese Ausrichtung und Größenvariation die Nachbereitungseinrichtung, d.h. der erwähnte Stufenboden oder Siebkasten, annähernd gleichmäßig mit ausgedroschenem Erntegut beladen werden kann, und zwar unabhängig von der Drehrichtung der Dreschtrommel und unabhängig von der Seitenneigung des Mähdreschers.

## Patentansprüche

1. Mähdrescher (1) mit einer Axialdreschmaschine (3) zum Ausdreschen von Erntegut, die eine in einem Mantelgehäuse (13) aufgenommene Dreschtrommel (11) mit Dreschorganen (17, 19) sowie ferner einen das Mantelgehäuse (13) mit einem veränderbaren Umfangsabschnitt (Dreschkorbsektor) überdeckenden Dreschkorb (15) aufweist, durch den das ausgedroschene Erntegut auf eine Nachbereitungseinrichtung (23), wie einen Siebkasten bzw. Stufenboden fällt und dort anschließend gereinigt wird, dadurch gekennzeichnet, daß der zur Abscheidung von ausgedroschenem Korngut wirksame Dreschkorbsektor (δ) in Umfangsrichtung des Dreschkorbes (15) beidseitig kontinuierlich verdrehbar ist.

2. Mähdrescher nach Anspruch 1, dadurch gekennzeichnet, daß an beiden Längsaußenkanten des Dreschkorbes (15) an dessen Umfangskontur angepaßte und den Dreschkorb (15) in einem einstellbaren Umfangswinkelsektor überdeckende Abdeckungen vorgesehen sind.

3. Mähdrescher nach Anspruch 2, dadurch gekennzeichnet, daß die Abdeckungen in Umfangsrichtung des Dreschkorbes (15) einstellbare Abdeckschieber (45) sind.

4. Mähdrescher nach Anspruch 3, dadurch gekennzeichnet, daß die Abdeckschieber (45) von außen einstellbar sind.

5. Mähdrescher nach Anspruch 4, dadurch gekennzeichnet, daß zur Verstellung der Abdeckschieber (45) ein Motor (53) vorgesehen ist.

6. Mähdrescher nach Anspruch 1, dadurch gekennzeichnet, daß zur Verstellung des Dreschkorbsektors (δ) das Mantelgehäuse (13) der Axialdreschmaschine (3) mitsamt dem Dreschkorb (15) zumindest in dem den Dreschkorb enthaltenden Bereich ingesamt um die Längsachse (41) der Dreschmaschine verdrehbar ist.

7. Mähdrescher nach Anspruch 6, dadurch gekennzeichnet, daß das Mantelgehäuse (13) und der Dreschkorb (15) auf Führungsrollen bzw. Führungswalzen (59) gelagert ist.

8. Mähdrescher nach Anspruch 7, dadurch gekennzeichnet, daß die Führungsrollen bzw. Führungswalzen (59) von einem Motor angetrieben sind.

9. Mähdrescher nach einem der vorhergehenden Ansprüche, dadurch gekennzeichnet, daß die Verstellung des Dreschkorbsektors (δ) automatisch in Abhängigkeit der Belastung der Nachbereitungseinrichtung (23) über deren Breite erfolgt.

10. Mähdrescher nach einem der Ansprüche 1 bis 7, dadurch gekennzeichnet, daß die Verstellung des Dreschkorbsektors (δ) in Abhängigkeit der Seitenneigung (durch Neigungsmesser 57) des Mähdreschers (1) automatisch erfolgt.

## Claims

1. A combine (1) with an axial-flow threshing apparatus (3) for threshing out harvested crops, comprising a threshing drum (11) received in a jacket housing (13) and provided with threshing members (17, 19), and further comprising a concave (15) which covers the jacket housing (13) with a variable peripheral sector (concave sector) and through which the threshed harvested crops fall onto an aftertreatment device (23), such as a sieve pan or a stepped bottom, where it is subsequently cleaned, characterized in that the concave sector (δ), which is effective for separating threshed harvested crops, is adapted to be continuously adjusted by rotation in the circumferential direction of the concave (15) at both sides thereof.

2. A combine according to claim 1, characterized in that, at both longitudinal outer edges of the concave (15), cover means are provided, which are adapted to the peripheral contour of said concave (15) and which cover said concave (15) along an adjustable peripheral angle sector.

3. A combine according to claim 2, characterized in that the cover means consist of cover slide means (45) adapted to be adjusted in the circumferential direction of the concave (15).

4. A combine according to claim 3, characterized in that the cover slide means (45) can be adjusted from the outside.

5. A combine according to claim 4, characterized in that a motor (53) is provided for effecting the adjustment of said cover slide means (45).

6. A combine according to claim 1, characterized in that, for the purpose of effecting an adjustment of the concave sector (d), the jacket housing (13) of the axial-flow threshing apparatus (3) together with the concave (15) can, as a whole, be rotated about the longitudinal axis (41) of the threshing apparatus at least in the area including the concave.

7. A combine according to claim 6, characterized in that the jacket housing (13) and the concave (15) are supported by guide rolls or guide cylinders (59).

8. A combine according to claim 7, characterized in that the guide rolls or guide . cylinders (59) are driven by a motor.

9. A combine according to one of the preceding claims, characterized in that the adjustment of the concave sector (δ) is effected automatically in response to the load on the aftertreatment device (23) across its width.

10. A combine according to one of the claims 1 to 7, characterized in that the adjustment of the concave sector (δ) is effected automatically in response to the lateral inclination (by gradient indicator 57) of the combine (1).

## Revendications

1- Moissonneuse-batteuse (1) équipée d'une batteuse axiale (3) pour le battage de produits récoltés, comprenant un cylindre batteur (11) et des éléments de battage (17, 19) logés dans un boîtier (13), ainsi qu'une grille-panier (15) recouvrant le boîtier (13) suivant un secteur périphérique variable (secteur de la grille-panier), à travers laquelle le produit récolté battu tombe sur un dispositif de traitement suivant (23), tel qu'un caisson de tamisage ou plateau à gradins, et là est ensuite nettoyé, caractérisée en ce que le secteur (δ) de la grille-panier utilisée pour la séparation du produit récolté battu, peut être tourné dans les deux sens, de façon continue, à la périphérie de la grille-panier (15).

2- Moissonneuse-batteuse selon la revendication 1, caractérisée en ce que des éléments de recouvrement adaptés au contour de la grille-panier (15), sont prévus sur les deux bords extérieurs longitudinaux de ladite grille et recouvrent la grille-panier (15) suivant un secteur angulaire périphérique réglable.

3- Moissonneuse-batteuse selon la revendication 2, caractérisée en ce que les éléments de recouvrement sont des glissières de recouvrement (45) réglables à la périphérie de la grille-panier (15).

4- Moissonneuse-batteuse selon la revendication 3, caractérisée en ce que les glissières de recouvrement (45) sont réglables de l'extérieur.

5- Moissonneuse-batteuse selon la revendication 4, caractérisée en ce qu'un moteur (53) est prévu pour déplacer les glissières de recouvrement (45).

6- Moissonneuse-batteuse selon la revendication 1, caractérisée en ce que, pour régler le secteur ($\delta$) de la grille-panier, le boîtier (13) de la batteuse axiale (3) ainsi que la grille-panier (15) peuvent être tournés ensemble autour de l'axe longitudinal (41) de la batteuse, au moins dans la région comportant la grille-panier.

7- Moissonneuse-batteuse selon la revendication 6, caractérisée en ce que le boîtier (13) et la grille-panier (15) sont montés sur des rouleaux ou galets de guidage (59).

8- Moissonneuse-batteuse selon la revendication (7), caractérisée en ce que les rouleaux ou galets de guidage (59) sont entraînés par un moteur.

9- Moissonneuse-batteuse selon l'une des revendications précédentes, caractérisée en ce que le réglage du secteur ($\delta$) de ladite grille-panier est obtenu automatiquement d'après la largeur du chargement du dispositif de traitement suivant (23).

10- Moissonneuse-batteuse selon l'une des revendications 1 à 7, caractérisée en ce que le réglage du secteur ($\delta$) de la grille-panier est obtenu automatiquement d'après l'inclinaison latérale de la moissonneuse-batteuse (1) (par le détecteur d'inclinaison 57).

Fig. 1

0 085 358

# Fig. 2a

Fig.2

Fig.3

Fig. 4